# EUROPÄISCHE PATENTSCHRIFT

(11) **EP 2 142 391 B1**
(45) Veröffentlichungstag und Bekanntmachung des Hinweises auf die Patenterteilung: **10.11.2010**
(21) Anmeldenummer: 08749579.2
(22) Anmeldetag: 16.04.2008
(51) Int. Cl.: B60G 21/055

(54) **WANKSTABILISATOR FÜR EIN KRAFTFAHRZEUG SOWIE GEHÄUSE FÜR DEN WANKSTABILISATOR**
ANTI-ROLL BAR FOR A MOTOR VEHICLE AND HOUSING FOR THE ANTI-ROLL BAR
STABILISATEUR DE ROULIS POUR UN VÉHICULE, AINSI QUE BOÎTIER POUR LE STABILISATEUR DE ROULIS

(30) Priorität: 21.04.2007 DE 102007019012; 20.02.2008 DE 102008010131
(43) Veröffentlichungstag der Anmeldung: 13.01.2010
(73) Patentinhaber: Schaeffler Technologies GmbH & Co. KG, 91074 Herzogenaurach (DE)
(72) Erfinder: DENNERLEIN, Johannes, 91365 Weilersbach (DE); GRAU, Ulrich, 91448 Emskirchen (DE); KRAUS, Manfred, 91074 Herzogenaurach (DE); MAYER, Ralf, 91074 Herzogenaurach (DE)
(86) Internationale Anmeldenummer: PCT/EP2008/054611
(87) Internationale Veröffentlichungsnummer: WO 2008/128938

(56) Entgegenhaltungen:
- EP-A- 1 512 560
- DE-A1- 10 233 499
- DE-A1-102005 047 278
- DE-A1-102005 059 147
- DE-C1- 19 533 478
- DE-U1- 20 303 107
- JP-A- 8 085 328
- JP-A- 2004 122 944

## Beschreibung

### Gebiet der Erfindung

Die Erfindung betrifft einen Wankstabilisator für ein Kraftfahrzeug mit einem ersten und einem zweiten Stabilisatorteil, welche jeweils einem Rad einer gemeinsamen Fahrzeugquerachse des Kraftfahrzeugs zuordbar und/oder zugeordnet sind, mit einem Gehäuse, welches für eine kraftfahrzeugfeste Montage ausgebildet ist und in dem die zwei Stabilisatorteile zur Durchführung von gleichsinnigen und gegensinnigen Schwenkbewegungen gelagert sind, und mit einer Aktuatorvorrichtung, welche einen Elektromotor und ein Übertragungsgetriebe umfasst, wobei der Elektromotor zur Erzeugung eines Drehmoments und das Übertragungsgetriebe zur Weiterführung des Drehmoments an die Stabilisatorteile ausgebildet sind sowie ein entsprechendes Gehäuse des Wankstabilisators.

### Hintergrund der Erfindung

Derartige aktive Wankstabilisatoren werden in Kraftfahrzeugen eingesetzt, um u. a. die ungleichmäßig verteilten Eintauchbewegungen der Räder einer Fahrzeugquerachse des Kraftfahrzeuges zu kompensieren. Derartige ungleichmäßige Eintauchbewegungen erfolgen beispielsweise in Kurvenfahrten des Kraftfahrzeuges, wobei das kurvenäußere Rad einer Fahrzeugquerachse des Kraftfahrzeuges tiefer eintaucht als das kurveninnere Rad. Durch die Verwendung eines aktiven Wankstabilisators wird demnach die Seitenneigung des Kraftfahrzeuges durch Verspannen der Stabilisatorteile gegeneinander gesteuert.

Bei konventionell verwendeten, passiven Wankstabilisatoren wird ein unterschiedliches Eintauchverhalten der Räder einer Fahrzeugquerachse durch eine Torsion eines Torsionsabschnitts des üblicherweise einstückig ausgebildeten Wankstabilisators kompensiert. Der Torsionsabschnitt der passiven Wankstabilisatoren erstreckt sich dabei fast über einen Großteil der gesamten Fahrzeugbreite. Im Gegensatz hierzu sind die Stabilisatorteile eines üblichen aktiven Wankstabilisators über ein Gelenk oder ein Getriebe miteinander verbunden, so dass sich zwei separate, jeweils einem der zwei Stabilisatorteile zugeordnete Torsionsabschnitte ausbilden. Erschwerend kommt hinzu, dass der Aktuator des aktiven Wankstabilisators, welcher aus dem Elektromotor und optional der Kompensationsanordnung gebildet wird, meist zwischen den Stabilisatorteilen angeordnet ist, was zu einer weiteren Verkürzung des Bauraums der Stabilisatorteile und damit zu einer Verkürzung der Torsionsabschnitte führt. Diese Torsionsabschnitte sind im Vergleich zu dem Torsionsabschnitt des passiven Wankstabilisators stark verkürzt, so dass für eine anwendungsgerechte Auslegung der Torsionsabschnitte diese mit einer deutlich härteren Drehfederrate ausgebildet sein müssen.

Die Druckschrift JP 8085328 schlägt ein Lagerregelungssystem für Fahrzeuge vor, wobei zwei Stabilisatoren über ein Stirnradgetriebe von einem Elektromotor angetrieben werden, wobei das Stirnradgetriebe eine Schwenkung der Stabilisatoren nur gegensinnig, konstruktionsbedingt jedoch nicht gleichsinnig erlaubt. Bei einem gemeinsamen Einfedern der Räder einer gemeinsamen Fahrzeugquerachse scheint das Lagerregelungssystem zu blockieren.

DE 102005 047278 A1 zeigt eine Schwenkmotoranordnung in einem geteilten Stabilisator, wobei das Motorgehäuse am Fahrzeug befestigt ist.

Die Druckschrift DE 102 33 499 A1, die wohl dem nächstkommenden Stand der Technik bildet, beschreibt einen geteilten, aktiven Kraftfahrzeugstabilisator mit zwei Stabilisatorteilen und mit einem Aktuator zur Wankregelung, wobei der Aktuator eine Einrichtung zur Drehmomentabgabe und eine Einrichtung zur Drehmomenterzeugung aufweist, wobei zumindest die Einrichtung zur Drehmomenterzeugung außerhalb des Zwischenraumes der beiden Stabilisatorteile angeordnet ist.

### Zusammenfassung der Erfindung

Der Erfindung liegt die Aufgabe zugrunde, einen Wankstabilisator für ein Kraftfahrzeug sowie ein entsprechendes Gehäuse für den Wankstabilisator vorzuschlagen, mit denen ein verbessertes dynamisches Verhalten des Wankstabilisators erreichbar ist.

Diese Aufgabe wird gelöst durch einen Wankstabilisator für ein Kraftfahrzeug mit den Merkmalen des Anspruchs 1 sowie mit einem Gehäuse ausgebildet für den Wankstabilisator mit den Merkmalen des Anspruchs 14. Bevorzugte oder vorteilhafte Ausführungsform der Erfindung ergeben sich aus den abhängigen Ansprüchen, der nachfolgenden Beschreibung sowie der beigefügten Zeichnung.

Erfindungsgemäß wird ein Wankstabilisator, insbesondere ein aktiver Wankstabilisator, für ein Kraftfahrzeug vorgeschlagen, welcher ein erstes und ein zweites Stabilisatorteil aufweist, die jeweils einem Rad einer gemeinsamen Fahrzeugquerachse des Kraftfahrzeuges zuordbar und/oder zuzuordnen sind. Die Stabilisatorteile können Torsionsabschnitte umfassen und sich insbesondere bis zu dem zugeordneten Rad bzw. bis zu einer Aufhängung des Rads erstrecken oder als mechanische Schnittstellen zur Aufnahme von Stabilisatoren mit Torsionsabschnitten ausgebildet sein. Der Wankstabilisator kann - je nach Ausführungsform - für eine Vorder- oder eine Hinterachse eines Kraftfahrzeuges ausgebildet sein.

Er umfasst ein in bzw. an dem Kraftfahrzeug fest und/oder starr befestigbares Gehäuse, in welchem die zwei Stabilisatorteile derart schwenkbar um eine insbesondere gemeinsame Schwenkachse gelagert sind, dass sie gleichsinnige und gegensinnige Schwenkbewegungen durchführen können. Die gleichsinnigen Schwenkbewegungen werden beispielsweise bei einem gemeinsamen Einfedern der stabilisierten Räder einer gemeinsamen Fahrzeugquerachse genutzt, die gegensinnigen Schwenkbewegungen werden zur selektiven Verteilung von Drehmomenten auf die zwei Stabilisatorteile eingesetzt.

Für eine aktive Verdrehung oder ein aktives Verspannen der Stabilisatorteile gegeneinander, insbesondere mittels der gegensinnigen Schwenkbewegungen, weist der Wankstabilisator eine Aktuatorvorrichtung auf, die einen Elektromotor, ein Übertragungsgetriebe und - optional - eine Kompensationsanordnung umfasst. Der Elektromotor ist zur Erzeugung eines Drehmoments vorgesehen, welches über das Übertragungsgetriebe auf die Stabilisatorteile oder an die optionale Kompensationsanordnung übertragen und dann über die Kompensationsanordnung auf die Stabilisatorteile abgegeben und/oder verteilt wird. Insbesondere ist die Kompensationsanordnung als ein Getriebe ausgebildet, welches die beiden bzw. die zwei Stabilisatorteile miteinander verschaltet und/oder gegeneinander verdreht.

Erfindungsgemäß ist der Elektromotor unabhängig von der bzw. den Schwenkbewegungen der Stabilisatorteile und insbesondere im eingebauten Zustand kraftfahrzeugfest, also ortsfest im oder am Kraftfahrzeug gelagert.

Durch die Erfindung wird erreicht, dass die Stabilisatorteile auch gemeinsam und gleichsinnig in dem Gehäuse verschwenken können, ohne jedoch bei der gemeinsamen Verschwenkbewegung den Elektromotor mitzuführen, da dieser im Gegensatz zu dem bekannten Stand der Technik unabhängig, insbesondere kraftfahrzeugfest - gegebenenfalls gefedert oder gedämpft - angeordnet ist. Ein aus dieser Anordnung resultierender Vorteil ist, dass die bei Schwenkbewegungen der Stabilisatorteile mitgeführte, ungefederte Masse reduziert ist, da der Elektromotor von diesem Schwenksystem abgekoppelt gelagert ist und demnach nicht bei Radeinfederungen bzw. Torsionen der Torsionsabschnitte von seiner Lagerungsposition bewegt wird bzw. schwingt. Aufgrund der Verringerung der ungefederten Masse wird das dynamische Verhalten, welches zwangsweise an die Masse des Schwenksystems gekoppelt ist, verbessert. Bevorzugt ist der Elektromotor für eine kraftfahrzeugfeste Montage ausgebildet und/oder relativ zu und/oder an bzw. in dem Gehäuse starr angeordnet.

Bei einer bevorzugten Ausführungsform ist der Elektromotor außerhalb eines Zwischenraumes zwischen den beiden Stabilisatorteilen, z.B. achsversetzt, angeordnet. Insbesondere greift der Elektromotor nicht durch eine gedachte Verlängerung der Schwenkachse und/oder einer der Torsionsachsen der Torsionsabschnitte der Stabilisatorteile ein bzw. überdeckt mit diesen. Mit dieser Ausbildung kann der Zwischenraum zwischen den Stabilisatorteilen für eine Verlängerung der Torsionsabschnitte genutzt werden, so dass die in der Einleitung diskutierten Nachteile der verkürzten Torsionsabschnitte zumindest abgeschwächt werden. Zudem wird durch die Verlagerung des Elektromotors aus dem Zwischenraum erreicht, dass statt sonst notwendigen Spezialmotoren Standardmotoren verwendet werden können.

Bei einer besonders bevorzugten Ausführungsform der Erfindung sind die Stabilisatorteile in dem Gehäuse um eine gemeinsame Schwenk- und/oder Torsionsachse schwenkbar gelagert, wobei insbesondere vorgesehen ist, dass die Torsionsabschnitte koaxial zu der gemeinsamen Torsionsachse und zudem zu der gemeinsamen Schwenkachse verlaufen.

Prinzipiell kann im Rahmen der Erfindung der Elektromotor beliebig ausgerichtet sein. Besonders bevorzugt ist es jedoch, dass die Motorwelle, also die Abtriebswelle, des Elektromotors parallel zu der Schwenkachse und/oder einer der Torsionsachsen der zwei Stabilisatorteile und/oder der gemeinsamen Torsionsachse ausgerichtet ist. Diese achsparallele Anordnung des Elektromotors erlaubt eine besonders platzsparende Umsetzung der Erfindung. Alternativ kann die Abtriebswelle auch senkrecht zu der Schwenkachse bzw. Torsionsachse ausgerichtet sein.

Das Übertragungsgetriebe ist vorzugsweise als Umschlingungsgetriebe, Stirnradgetriebe, Schneckengetriebe oder Riemengetriebe ausgebildet. Bevorzugt weist das Übertragungsgetriebe bereits eine Übersetzung auf, die zur Übersetzung des relativen niedrigen Motormoments des Elektromotors genutzt ist, wodurch das Übersetzungsverhältnis eines gegebenenfalls nachgeschalteten Übersetzungsgetriebes geringer ausgeführt werden kann. Diese Ausführung berücksichtigt den Umstand, dass im Allgemeinen Elektromotoren eine hohe Drehzahl, jedoch ein niedriges Motordrehmoment erzeugen.

Eine vorteilhafte Weiterbildung der Erfindung sieht vor, dass die optionale Kompensationsanordnung zwischen den Stabilisatorteilen angeordnet ist. Insbesondere ist die Kompensationsanordnung koaxial zu der gemeinsamen Schwenkachse, der gemeinsamen Torsionsachse und/oder in dem Zwischenraum zwischen den Stabilisatorteilen angeordnet. An dieser Position kann die Drehmomentübertragung an die Stabilisatorteile besonders effektiv und platzsparend durchgeführt werden, wohingegen der Elektromotor vorzugsweise aus dem koaxialen Bereich ausgelagert ist.

Bei einer bevorzugten praktischen Realisierung weist die optionale Kompensationsanordnung ein Übersetzungsgetriebe, welches vorzugsweise als ein Planetengetriebe, insbesondere als ein zweistufiges Planetengetriebe ausgebildet ist, sowie ein Kompensationsgetriebe auf, welches ausgebildet ist, das Drehmoment in eine relative Verschwenkung der Stabilisatorteile zueinander um die Schwenkachse und/oder um die Torsionsachse umzusetzen, und beispielsweise als Kurvenbahngetriebe realisiert ist. Das Übersetzungsgetriebe dient dazu, das nach dem Übertragungsgetriebe immer noch relativ niedrige Motormoment zu übersetzen, wobei beispielsweise ein Übersetzungsverhältnis im Bereich von 1:50 realisiert ist. Bei alternativen Ausführungsformen kann das Übersetzungsgetriebe auch ein schwenkwinkelabhängiges Übersetzungsverhältnis aufweisen.

In einer konstruktiven Umsetzung ist es bevorzugt, dass das erste der Stabilisatorteile schwenkfest mit einem Übertragungsgetriebegehäuse und einem Kompensationseinrichtungsgehäuse verbunden ist und mit diesen Komponenten eine erste Baugruppe bildet, die in dem Gehäuse schwenkbar gelagert ist. Das zweite Stabilisatorteil ist dagegen vorzugsweise im Sinne einer Abtriebswelle in der ersten Baugruppe gelagert, so dass das zweite Stabilisatorteil über die erste Baugruppe in dem Gehäuse gelagert ist. Im Betrieb führt eine relative Verdrehung der ersten Baugruppe zu dem zweiten Stabilisatorteil zu einem auf die Fahrzeuglängsachse wirkendes Moment zum Ausgleich von Wankbewegungen.

Um selbst im Falle eines Stromausfalles einen sicheren Fahrbetrieb zu gewährleisten, weist der Wankstabilisator optional eine Blockiervorrichtung, auch Fail-Safe-Vorrichtung genannt, auf, die ausgebildet ist - zum Beispiel bei Stromausfall - eine Relativverschwenkung der Stabilisatorteile zueinander zu blockieren. Diese Blockiervorrichtung kann beispielsweise als eine integrierte Bremse oder Sperre in dem Elektromotor vorgesehen sein. Bei alternativen Ausführungsformen weist das Übersetzungsgetriebe eine derartige integrierte Sperre auf. Eine weitere optionale Anordnungsposition für die Sperre kann in dem Übertragungsgetriebe, insbesondere in dem Umschlingungsgetriebe bereitgestellt werden.

Ein weiterer Gegenstand der Erfindung betrifft ein Gehäuse ausgebildet für den Wankstabilisator nach einem der vorhergehenden Ansprüche bzw. wie er soeben beschrieben wurde, wobei das Gehäuse eine mechanische Schnittstelle zur starren Befestigung des Gehäuses an dem Kraftfahrzeug, eine Motoraufnahme, z.B. einen Befestigungsflansch, zur Aufnahme des Elektromotors, und eine Lagerungsvorrichtung, insbesondere ein Wälz- oder Gleitlager zur schwenkbaren Aufnahme der Stabilisatorteile, insbesondere zur schwenkbaren Aufnahme der ersten Baugruppe aufweist.

Bei einer bevorzugten Ausführungsform ist das Gehäuse und/oder der Wankstabilisator ausgebildet, so dass die Stabilisatorteile nur über die Lagerungsvorrichtung in dem Gehäuse gelagert sind und bis zu den Schnittstellen an den Rädern keine weiteren Stabilisatorlager vorgesehen sind. Aufgrund des Aufbaus des Wankstabilisators ist die Lagerungsvorrichtung optional asymmetrisch zu den Rädern angeordnet.

Zusammenfassend ergeben sich durch die chassisfeste Anordnung des Elektromotors diverse Vorteile: Die Elektromotorlagerung und die Stabilisatorlagerung kann in einem gemeinsamen Gehäuse vorgesehen sein. Der Elektromotor ist relativ zu dem Kraftfahrzeug starr befestigt, so dass dieser nicht zu der ungefederten Masse der Stabilisatorachse gehört, wobei eine deutliche Senkung der Schwingungsbelastung zu erwarten ist. Zudem erfahren die elektrischen Motorzuleitungen keine dynamischen Beanspruchungen bei Schwenkbewegungen der Stabilisatorteile. Der benötigte Bauraum für den Wankstabilisator ist gering, weil der Elektromotor nicht mitbewegt wird und somit kein Schwenkbereich für den Elektromotor vorgesehen werden muss.

### Kurze Beschreibung der Zeichnungen

Weitere Merkmale, Vorteile und Wirkungen der Erfindung ergeben sich aus der nachfolgenden Beschreibung sowie der beigefügten Figur eines bevorzugten Ausführungsbeispiels. Dabei zeigt:

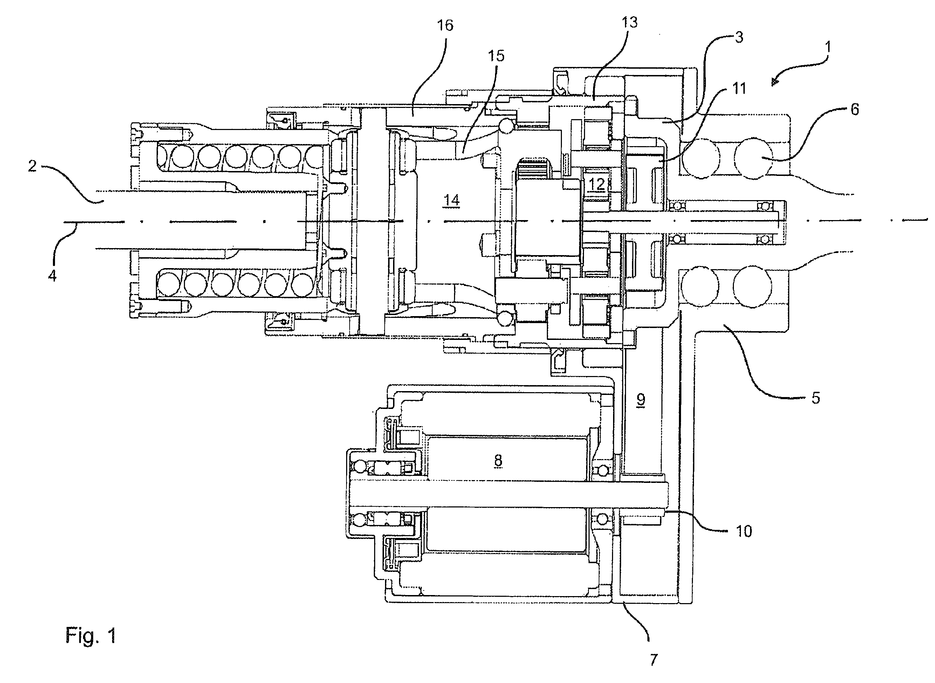

- Figur 1: eine schematische Schnittansicht eines Wankstabilisators als ein Ausführungsbeispiel der Erfindung.

### Detaillierte Beschreibung der Zeichnungen

Die Figur 1 zeigt in einer schematischen Schnittdarstellung einen Wankstabilisator 1 für ein Kraftfahrzeug als ein Ausführungsbeispiel der Erfindung. Der Wankstabilisator 1 ist ausgebildet, um zwei Stabilisatoren zueinander verschwenkbar zu verkoppeln, wobei in der Figur 1 auf der linken Seite nur die Aufnahme 2 für den einen Stabilisator und auf der rechten Seite ein Flansch 3 zur Befestigung des zweiten Stabilisators gezeigt ist. Die beiden Stabilisatoren weisen jeweils einen Torsionsabschnitt auf, die zur Durchführung einer Torsion um eine Hauptachse 4, die somit die gemeinsame Torsionsachse bildet, angeordnet sind.

Der Wankstabilisator 1 weist ein Gehäuse 5 auf, welches mit dem Kraftfahrzeug fest verbunden ist. Gegebenenfalls sind übliche Dämpfungselemente zwischen Gehäuse 5 und Kraftfahrzeug vorgesehen, um im Betrieb ein Klappern oder dergleichen zu vermeiden. Das Gehäuse 5 weist auf seiner in Figur 1 rechts dargestellten Seite ein zweireihiges Wälzlager 6 auf, welches koaxial zu der Hauptachse 4 ausgerichtet ist und den Flansch 3 und damit den rechten Stabilisator in dem Gehäuse 5 lagert. Optional kann vorgesehen sein, dass ein Außenring mit einer Außenlauffläche des Wälzlagers 6 einstückig an dem Gehäuse 5 angeformt ist.

Zudem weist das Gehäuse 5 einen Motorflansch 7 auf an den ein Elektromotor 8 angeflanscht ist, wobei der Elektromotor 8 bzw. dessen Abtriebswelle gegenüber der Hauptachse 4 parallel versetzt und überlappungsfrei angeordnet ist. Der Elektromotor 8 dient dazu, ein Drehmoment zu erzeugen, welches verwendet wird, um die beiden Stabilisatoren gegeneinander um die Hauptachse, die dann zugleich eine Schwenkachse bildet, zu verschwenken, so dass die Stabilisatoren gegeneinander verspannt werden. Durch die Aufnahme des Elektromotors 8 in dem Motorflansch 7 ist dieser relativ zu dem Gehäuse 5 und damit relativ zu dem Kraftfahrzeug starr oder fest angeordnet.

Das von dem Elektromotor 8 erzeugte Drehmoment wird über einen Riemen 9 in das Gehäuse 5 übertragen. Der Riemen 9 ist dabei Teil eines Riemengetriebes mit einem Abtriebsrad 10 und einem Antriebsrad 11, wobei der Durchmesser des Abtriebsrads 10 kleiner gewählt ist als der Durchmesser des Antriebsrads 11. Durch das gewählte Durchmesserverhältnis wird das Drehmoment des Elektromotors 8 übersetzt.

Das Antriebsrad 11 ist koaxial zu dem Sonnenrad eines zweistufigen Planetengetriebes 12, welches als nachgeschaltetes Übersetzungsgetriebe ausgebildet ist, angeordnet, wobei das Planetengetriebe 12 in einem Planetengetriebegehäuse 13 gelagert ist.

Ausgehend von dem Planetengetriebe 12 wird das Drehmoment an ein Kompensationsgetriebe 14 übertragen, welches beispielweise als KurvenbahnGetriebe ausgebildet ist. Das Kurvenbahngetriebe setzt das Drehmoment in eine Relativverschwenkung zwischen einem koaxial angeordneten Innenteil 15 und dem das Innenteil 15 konzentrisch umgebenden Kompensationsgetriebegehäuse 16 um.

Das Innenteil 15 ist drehfest mit der Aufnahme 2 für den linken Stabilisator verbunden. Das relativ dazu verschwenkende Kompensationsgetriebegehäuse 16 ist dagegen drehfest über das Planetengetriebegehäuse 13 mit dem Flansch 3 für den rechten Stabilisator verbunden. Die geschilderte Relativverschwenkung führt somit zu einer Relativverschwenkung zwischen dem linken und dem rechten Stabilisator, so dass eine Verspannung zwischen diesen durch den Elektromotor 8 gezielt steuerbar ist.

Im Betrieb weist der Wankstabilisator 1 aufgrund der chassisfesten Lagerung des Elektromotors 1 den Vorteil auf, dass bei einem gemeinsamen Verschwenken der Stabilisatoren der Elektromotor 8 nicht verschwenkt, sondern nur dessen Abtriebswelle gedreht wird. Wird diese gemeinsame Verschwenkung der Stabilisatoren nicht ausgeregelt bzw. ausgesteuert, entsteht durch das nachgeschaltete Planetengetriebe 12 und das Übertragungsgetriebe, die gemeinsam ein Übersetzungsverhältnis von z. B. 1:50 verwirklichen, bei einer maximalen Einfederung der Räder bzw. des Fahrwerks und einem maximalen Verschwenken zwischen den Stabilisatoren und dem ortsfest im Kraftfahrzeug montierten Gehäuse 5 von ca. 25° ein gegenseitiges Verschwenken der Stabilisatoren zueinander von ca. 0,5°, wobei diese relative Verschwenkung vernachlässigt werden kann. Optional kann diese Verschwenkung durch eine Steuerungselektronik aktiv ausgeregelt oder -gesteuert werden.

### Bezugszeichen

- 1: Wankstabilisator
- 2: Aufnahme für den linken Stabilisator
- 3: Flansch für den rechten Stabilisator
- 4: Hauptachse
- 5: Gehäuse
- 6: Wälzlager
- 7: Motorflansch
- 8: Elektromotor
- 9: Riemen
- 10: Abtriebsrad
- 11: Antriebsrad
- 12: Planetengetriebe
- 13: Planetengetriebegehäuse
- 14: Kompensationsgetriebe
- 15: Innenteil
- 16: Kompensationsgetriebegehäuse

## Patentansprüche

1. Wankstabilisator (1) für ein Kraftfahrzeug mit einem ersten und einem zweiten Stabilisatorteil (2, 3), welche jeweils einem Rad einer gemeinsamen Fahrzeugquerachse des Kraftfahrzeugs zuordenbar und/oder zugeordnet sind, mit einem Gehäuse (5), welches für eine kraftfahrzeugfeste Montage ausgebildet ist und in dem die zwei Stabilisatorteile (2, 3) zur Durchführung von gleichsinnigen und gegensinnigen Schwenkbewegungen gelagert sind, und mit einer Aktuatorvorrichtung, welche einen Elektromotor (8) und ein Übertragungsgetriebe (9, 10, 11) umfasst, wobei der Elektromotor (8) zur Erzeugung eines Drehmoments und das Übertragungsgetriebe (9, 10, 11) zur Weiterführung des Drehmoments an die Stabilisatorteile (2, 3) ausgebildet und/oder angeordnet sind, **dadurch gekennzeichnet, dass** der Elektromotor (8) von der Schwenkbewegung der Stabilisatorteile (2, 3) entkoppelt gelagert ist.

2. Wankstabilisator (1) nach Anspruch 1, **dadurch gekennzeichnet, dass** die Aktuatorvorrichtung eine Kompensationsanordnung (12) umfasst, wobei das Übertragungsgetriebe (9, 10, 11) zur Übertragung des Drehmoments an die Kompensationsanordnung (12) und die Kompensationsanordnung (12) zur Abgabe des Drehmoments an die Stabilisatorteile (2,3) ausgebildet und/oder angeordnet ist.

3. Wankstabilisator (1) nach Anspruch 1 oder 2, **dadurch gekennzeichnet, dass** der Elektromotor (8) für eine kraftfahrzeugfeste Montage ausgebildet und/oder relativ zu und/oder an bzw. in dem Gehäuse (5) starr angeordnet ist.

4. Wankstabilisator (1) nach einem der vorhergehenden Ansprüche, **dadurch gekennzeichnet, dass** der Elektromotor (8) außerhalb eines Zwischenraums zwischen den beiden Stabilisatorteilen (2, 3) angeordnet ist.

5. Wankstabilisator (1) nach einem der vorhergehenden Ansprüche, **dadurch gekennzeichnet, dass** die Stabilisatorteile (2, 3) in dem Gehäuse (5) um eine gemeinsame Schwenk- und/oder Torsionsachse (4) schwenkbar gelagert sind.

6. Wankstabilisator (1) nach einem der vorhergehenden Ansprüche, **dadurch gekennzeichnet, dass** die Motorwelle des Elektromotors (8) parallel zu einer der Torsionsachsen, zu der gemeinsamen Torsionsachse (4) und/oder zu der gemeinsamen Schwenkachse (4) ausgerichtet ist.

7. Wankstabilisator (1) nach einem der vorhergehenden Ansprüche, **dadurch gekennzeichnet, dass** das Übertragungsgetriebe als Umschlingungsgetriebe (9, 10, 11), Stirnradgetriebe, Schneckengetriebe oder Riemengetriebe ausgebildet ist.

8. Wankstabilisator (1) nach einem der vorhergehenden Ansprüche 2 bis 7, **dadurch gekennzeichnet, dass** die Kompensationsanordnung (12, 13) zwischen den Stabilisatorteilen (2, 3) angeordnet ist.

9. Wankstabilisator (1) nach einem der vorhergehenden Ansprüche 2 bis 8, **dadurch gekennzeichnet, dass** die Kompensationsanordnung ein Übersetzungsgetriebe (12), vorzugsweise ein Planetengetriebe umfasst.

10. Wankstabilisator (1) nach einem der vorhergehenden Ansprüche 2 bis 9, **dadurch gekennzeichnet, dass** die Kompensationsanordnung ein Kompensationsgetriebe (14) aufweist, welches vorzugsweise als Kurvenbahn-Getriebe ausgebildet ist.

11. Wankstabilisator (1) nach einem der vorhergehenden Ansprüche, **dadurch gekennzeichnet, dass** das erste Stabilisatorteil (3) drehfest mit einem Übertragungsgetriebegehäuse (13) und einem Kompensationseinrichtungsgehäuse (16) verbunden ist und als eine erste Baugruppe in dem Gehäuse (5) schwenkbar gelagert ist.

12. Wankstabilisator (1) nach Anspruch 11, **dadurch gekennzeichnet, dass** das zweite Stabilisatorteil (2) in der ersten Baugruppe schwenkbar aufgenommen und über die erste Baugruppe in dem Gehäuse (5) gelagert ist.

13. Wankstabilisator (1) nach einem der vorhergehenden Ansprüche, **gekennzeichnet durch** eine Blockiervorrichtung, die ausgebildet ist, eine Relativverdrehung der Stabilisatorteile (2, 3) zueinander zu blockieren.

14. Wankstabilisator (1) nach Anspruch 12, **dadurch gekennzeichnet, dass** die Blockiervorrichtung in dem Elektromotor, in dem Übersetzungsgetriebe und/oder in dem Übertragungsgetriebe integriert ist.

15. Gehäuse (5) ausgebildet für den Wankstabilisator (1) nach einem der vorhergehenden Ansprüche mit einer Schnittstelle zur kraftfahrzeugfesten Befestigung des Gehäuses (5) an dem Kraftfahrzeug, mit einer Motoraufnahme (7) zur dreh- und schwenksteifen Aufnahme des Elektromotors (8) und mit einer Lagerungsvorrichtung (6) zur schwenkbaren Aufnahme der Stabilisatorteile.

## Claims

1. Anti-roll bar (1) for a motor vehicle having a first and a second stabilizer part (2, 3), which can each be assigned and/or are assigned to a wheel of a common vehicle transverse axis of the motor vehicle, having a housing (5) which is designed for fixed installation in the motor vehicle and in which the two stabilizer parts (2, 3) are mounted in order to carry out pivoting movements in the same direction and in opposing directions, and having an actuator device which comprises an electric motor (8) and a transmission (9, 10, 11), wherein the electric motor (8) is designed and/or arranged so as to generate a torque, and the transmission (9, 10, 11) is designed and/or arranged so as to transfer the torque to the stabilizer parts (2, 3), **characterized in that** the electric motor (8) is mounted in such a way that it is decoupled from the pivoting movement of the stabilizer parts (2, 3).

2. Anti-roll bar (1) according to Claim 1, **characterized in that** the actuator device comprises a compensation arrangement (12), wherein the transmission (9, 10, 11) is designed and/or arranged so as to transmit the torque to the compensation arrangement (12), and the compensation arrangement (12) is designed and/or arranged so as to output the torque to the stabilizer parts (2, 3).

3. Anti-roll bar (1) according to Claim 1 or 2, **characterized in that** the electric motor (8) is designed for fixed installation in the motor vehicle and/or is rigidly arranged in relation to and/or on or in the housing (5).

4. Anti-roll bar (1) according to one of the preceding claims, **characterized in that** the electric motor (8) is arranged outside an intermediate space between the two stabilizer parts (2, 3).

5. Anti-roll bar (1) according to one of the preceding claims, **characterized in that** the stabilizer parts (2, 3) are mounted in the housing (5) so as to be pivotable about a common pivoting axis (4) and/or torsional axis (4).

6. Anti-roll bar (1) according to one of the preceding claims, **characterized in that** the motor shaft of the electric motor (8) is oriented parallel to one of the torsional axes, to the common torsional axis (4) and/or to the common pivoting axis (4).

7. Anti-roll bar (1) according to one of the preceding claims, **characterized in that** the transmission is embodied as a continuously variable transmission (9, 10, 11), spur gear transmission, worm gear mechanism or belt transmission.

8. Anti-roll bar (1) according to one of the preceding Claims 2 to 7, **characterized in that** the compensation arrangement (12, 13) is arranged between the stabilizer parts (2, 3).

9. Anti-roll bar (1) according to one of the preceding Claims 2 to 8, **characterized in that** the compensation arrangement comprises a transmission (12), preferably a planetary gear mechanism.

10. Anti-roll bar (1) according to one of the preceding Claims 2 to 9, **characterized in that** the compensation arrangement has a compensation transmission (14), which is preferably embodied as a curved track transmission.

11. Anti-roll bar (1) according to one of the preceding claims, **characterized in that** the first stabilizer part (3) is connected in a rotationally fixed fashion to a transmission housing (13) and to a compensation device housing (16) and is pivotably mounted as a first assembly in the housing (5).

12. Anti-roll bar (1) according to Claim 11, **characterized in that** the second stabilizer part (2) is pivotably held in the first assembly and is mounted in the housing (5) by means of the first assembly.

13. Anti-roll bar (1) according to one of the preceding claims, **characterized by** a locking device which is designed to block a relative rotation of the stabilizer parts (2, 3) with respect to one another.

14. Anti-roll bar (1) according to Claim 12, **characterized in that** the blocking device is integrated into the electric motor, into the speed-changing transmission and/or into the transmission.

15. Housing (5) designed for the anti-roll bar (1) according to one of the preceding claims having an interface for fixed attachment of the housing (5) to the motor vehicle, having a motor receptacle (7) for holding the electric motor (8) in a fashion which is rigid with respect to rotation and pivoting, and having a bearing device (6) for pivotably receiving the stabilizer parts.

## Revendications

1. Stabilisateur de roulis (1) pour un véhicule automobile comprenant une première et une deuxième partie de stabilisateur (2, 3), qui peuvent être associées et/ou qui sont associées à chaque fois à une roue d'un essieu transversal commun du véhicule automobile, un boîtier (5), qui est réalisé pour un montage fixe sur le véhicule automobile et dans lequel les deux parties de stabilisateur (2, 3) sont montées de manière à effectuer des mouvements de pivotement dans le même sens et en sens contraire, et un dispositif d'actionneur qui comprend un moteur électrique (8) et une transmission (9, 10, 11), le moteur électrique (8) étant réalisé et/ou disposé pour produire un couple et la transmission (9, 10, 11) étant réalisée et/ou disposée pour transférer le couple aux parties de stabilisateur (2, 3), **caractérisé en ce que** le moteur électrique (8) est monté de manière désaccouplée du mouvement de pivotement des parties de stabilisateur (2, 3).

2. Stabilisateur de roulis (1) selon la revendication 1, **caractérisé en ce que** le dispositif d'actionneur comprend un agencement de compensation (12), la transmission (9, 10, 11) étant réalisée et/ou disposée pour transférer le couple à l'agencement de compensation (12) et l'agencement de compensation (12) étant réalisé et/ou disposé pour fournir le couple aux parties de stabilisateur (2, 3).

3. Stabilisateur de roulis (1) selon la revendication 1 ou 2, **caractérisé en ce que** le moteur électrique (8) est réalisé pour un montage fixe sur le véhicule automobile et/ou est disposé rigidement par rapport au boîtier (5) et/ou sur ou dans celui-ci.

4. Stabilisateur de roulis (1) selon l'une quelconque des revendications précédentes, **caractérisé en ce que** le moteur électrique (8) est disposé en dehors d'un espace intermédiaire entre les deux parties de stabilisateur (2, 3).

5. Stabilisateur de roulis (1) selon l'une quelconque des revendications précédentes, **caractérisé en ce que** les parties de stabilisateur (2, 3) sont montées dans le boîtier (5) de manière à pouvoir pivoter autour d'un axe de pivotement et/ou de torsion commun (4).

6. Stabilisateur de roulis (1) selon l'une quelconque des revendications précédentes, **caractérisé en ce que** l'arbre de moteur du moteur électrique (8) est orienté parallèlement à l'un des axes de torsion, à l'axe de torsion commun (4) et/ou à l'axe de pivotement commun (4).

7. Stabilisateur de roulis (1) selon l'une quelconque des revendications précédentes, **caractérisé en ce que** la transmission est réalisée sous forme de variateur de vitesse (9, 10, 11), en tant que transmission à pignons droits, en tant que transmission à vis sans fin ou en tant que transmission à courroie.

8. Stabilisateur de roulis (1) selon l'une quelconque des revendications 2 à 7, **caractérisé en ce que** l'agencement de compensation (12, 13) est disposé entre les parties de stabilisateur (2, 3).

9. Stabilisateur de roulis (1) selon l'une quelconque des revendications 2 à 8, **caractérisé en ce que** l'agencement de compensation comprend un engrenage réducteur (12), de préférence un engrenage planétaire.

10. Stabilisateur de roulis (1) selon l'une quelconque des revendications 2 à 9, **caractérisé en ce que** l'agencement de compensation comprend une transmission à compensation (14), qui est réalisée de préférence sous forme de transmission à came.

11. Stabilisateur de roulis (1) selon l'une quelconque des revendications précédentes, **caractérisé en ce que** la première partie de stabilisateur (3) est connectée de manière solidaire en rotation à un boîtier de la transmission (13) et à un boîtier du dispositif de compensation (16) et est montée de manière pivotante sous forme de premier module dans le boîtier (5).

12. Stabilisateur de roulis (1) selon la revendication 11, **caractérisé en ce que** la deuxième partie de stabilisateur (2) est reçue de manière pivotante dans le premier module et est montée dans le boîtier (5) par le biais du premier module.

13. Stabilisateur de roulis (1) selon l'une quelconque des revendications précédentes, **caractérisé par** un dispositif de blocage, qui est réalisé de manière à bloquer une rotation relative des parties de stabilisateur (2, 3) l'une par rapport à l'autre.

14. Stabilisateur de roulis (1) selon la revendication 12, **caractérisé en ce que** le dispositif de blocage est intégré dans le moteur électrique, dans l'engrenage réducteur et/ou dans la transmission.

15. Boîtier (5) réalisé pour le stabilisateur de roulis (1) selon l'une quelconque des revendications précédentes, comprenant une interface pour la fixation, fixée au véhicule automobile, du boîtier (5) sur le véhicule automobile, avec un logement de moteur (7) pour recevoir de manière rigide en rotation et en pivotement le moteur électrique (8) et comprenant un dispositif de support sur palier (6) pour recevoir de manière pivotante les parties de stabilisateur.
